**Europäisches Patentamt**

(19) **European Patent Office**

**Office européen des brevets**

(11) Veröffentlichungsnummer: **0 129 110**
**B1**

(12) # EUROPÄISCHE PATENTSCHRIFT

(45) Veröffentlichungstag der Patentschrift:
14.10.87

(21) Anmeldenummer: 84106083.3

(22) Anmeldetag: 28.05.84

(51) Int. Cl.⁴: **G 21 C 17/00,** G 01 N 1/24

(54) **Probensammeleinrichtung für gas- oder dampfförmige kondensierbare radioaktive Stoffe, insbesondere zum Sammeln von Tritiumspuren.**

(30) Priorität: 10.06.83 DE 3321063

(43) Veröffentlichungstag der Anmeldung:
27.12.84 Patentblatt 84/52

(45) Bekanntmachung des Hinweises auf die Patenterteilung:
14.10.87 Patentblatt 87/42

(84) Benannte Vertragsstaaten:
CH DE FR GB LI SE

(56) Entgegenhaltungen:
DE-A-1 943 669
GB-A-2 081 895

IEEE TRANSACTIONS ON NUCLEAR SCIENCE, Band NS-29, Nr. 1, Februar 1982, Seiten 722-725, IEEE, New York, US; L. HOLMES u.a.: "Swedish nuclear power station on-line isotopic stack monitoring system"
BROWN BOVERI REVIEW, Band 66, Nr. 8, August 1979, Seiten 531-540, Baden, CH; L. LABNO: "Monitoring the radioactivity in the secondary systems of a nuclear power plant"

(73) Patentinhaber: Siemens Aktiengesellschaft Berlin und München, Wittelsbacherplatz 2, D-8000 München 2 (DE)

(72) Erfinder: Redmann, Eckhard, Dipl.- Ing., Holbeinstrasse 19, D-6000 Frankfurt 70 (DE)

EP 0 129 110 B1

## Beschreibung

Die Erfindung bezieht sich auf eine Probensammeleinrichtung zum Sammeln von Tritiumspuren über den in der Kaminabluft einer kerntechnischen Anlage oder eines Kernkraftwerkes enthaltenen Anteil an $T_2O$-Dampf, wobei ein aus der Kaminabluft entnommener Meßgasstrom über Filter und Meßgaspumpe und mindestens einen Zweig durch eine Abscheideleitung eines Meßgaskühlers gedrückt, der Durchfluß gemessen und der Meßgasstrom in den Abgaskamin zurückgeleitet wird.

Eine solche Probensammeleinrichtung ist durch die GB-A-2 081 895 bekannt, auf die weiter unten noch eingegangen wird.

Nach den sicherheitstechnischen Regeln des Kerntechnischen Ausschusses (KTA), Teil 1: Messung und Überwachung der Ableitung radioaktiver Stoffe mit der Kaminabluft bei bestimmungsgemäßen Betrieb (KTA 1503.1, Fassung 2/79) ist zur Tritium-Überwachung ausgesagt, daß kontinuierlich Tritium-Proben aus der Kaminabluft zu nehmen und vierteljährlich auszuwerten sind, und zwar bei Leichtwasser- und bei Hochtemperaturreaktoren. Tritium ist das schwerste Wasserstoffisotop. Sein Atomgewicht beträgt 3,01686 (bezogen auf $^{12}C$), es ist radioaktiv. Bei kerntechnischen Anlagen im allgemeinen und bei Kernkraftwerken im besonderen werden mit der Abluft Tritiumspuren in die Umwelt abgegeben. Von der Menge der Tritiumspuren kann man Rückschlüsse auf den Betriebszustand des Reaktors ziehen. In kerntechnischen Anlagen, insbesondere Kernkraftwerken, müssen - wie erwähnt - die in der Abluft enthaltenen Tritiumspuren über längere Zeiträume zuverlässig überwacht und die gesammelten Proben dann einer labormäßigen Untersuchung unterzogen werden. Letztere geschieht im allgemeinen nicht am Ort, wo die Probe gesammelt wird, sondern entfernt davon in einem Labor. Das besondere Problem einer solchen Probensammeleinrichtung ist das, daß möglichst wenig oder gar keine manuelle Operationen während des Probennahme-Intervalls an der Einrichtung vorgenommen werden sollen; diese soll möglichst eigensicher arbeiten, so daß nur am Ende des Probennahme-Intervalls die gesammelte Probe entnommen und gegen ein leeres Austauschgefäß ausgewechselt zu werden braucht. Ein solcher kontinuierlicher Probennahmen-Betrieb stellt aber an das pneumatischhydraulische sowie an das elektrische System der Probensammeleinrichtung erhöhte Anforderungen.

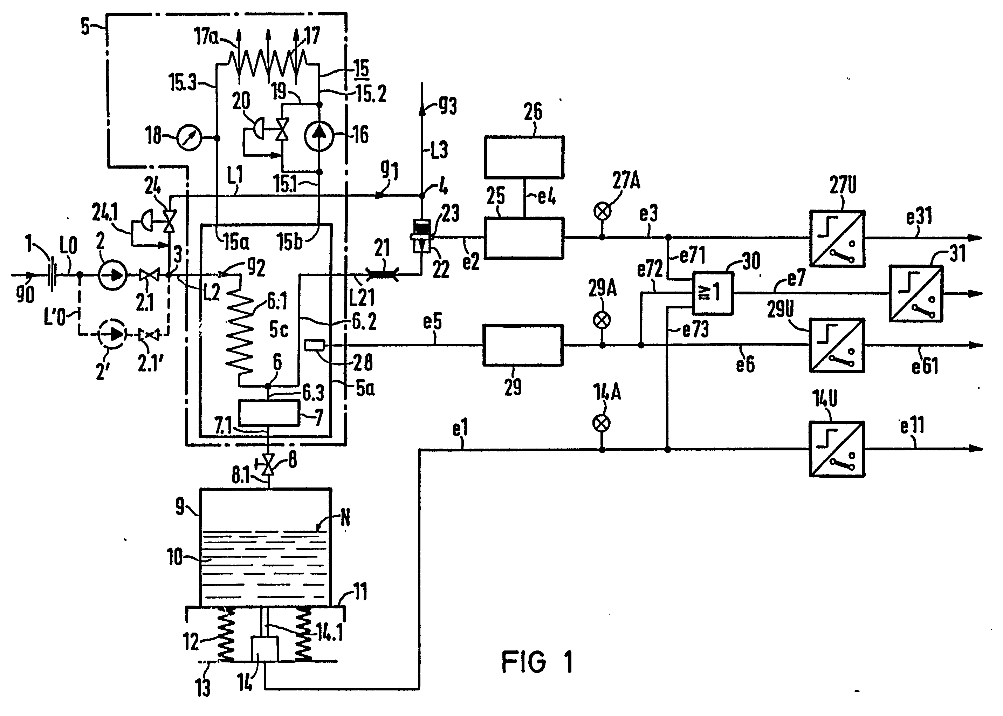

Beim Gegenstand der oben erwähnten GB-A-2 081 895 sind mindestens zwei zueinander parallelgeschaltete Meßgaszweige vorgesehen, von denen der eine zum Auskondensieren des Wasserdampfes und der andere zum Abscheiden des Kohlendioxids in der Abluft dient, wobei jeder dieser Zweige wiederum in jeweils zwei Unterzweige unterteilt werden kann. In jedem der Zweige befindet sich ein Durchflußmesser (siehe dort Fig. 1), und die gesamte angesaugte Abluft wird durch die Zweige hindurchgeleitet. Demgegenüber geht die Erfindung von der Überlegung aus, daß man eine genauere Durchflußmessung erzielt, wenn man nicht das gesamte angesaugte Abgas durch Meßgaszweige leitet, sondern nur einen Teil davon und wenn man - nicht so wie bei der bekannten Einrichtung - die Durchflußmesser vor der Abscheidestrecke, sondern hinter dieser anordnet.

Der Erfindung liegt unter Verwertung dieser Erkenntnisse die Aufgabe zugrunde, eine Probensammeleinrichtung der eingangs definierten Art zu schaffen, welche eigensicher über einen längeren Überwachungszeitraum arbeitet und bei auftretenden Störungen zumindest eine Störungsmeldung an die Warte abgibt. Durch die Gesamtanordnung soll eine möglichst genaue Durchflußmengenmessung und eine geringe Störanfälligkeit gewährleistet sein.

Erfindungsgemäß wird die gestellte Aufgabe durch die im Kennzeichen des Anspruchs 1 angegebenen Merkmale gelöst. Vorteilhafte Weiterbildungen sind in den Unteransprüchen 2 bis 5 angegeben.

Die mit der Erfindung erzielbaren Vorteile sind durch die kombinatorische Wirkung einer Reihe von Maßnahmen erzielt: Dadurch, daß die Meßgaspumpe das Meßgas durch die Abscheideleitung bzw. Abscheideleitungen des Meßgaskühlers drückt und eine Drossel sowie der Durchflußgeber diesen Abscheideleitungen nachgeschaltet sind, hat die Pumpe immer einen definierten Vordruck auf ihrer Druckseite, der durch den Druck-Istzustand hinter dem Durchflußgeber im Sinne einer konstanten Mengenstromregelung dadurch konstant gehalten wird, daß eine Druckmeßleitung als Bypaßleitung vom Ausgang des Durchflußgebers zur Druckseite der Pumpe über ein Druckdifferenz-Regelventil bzw. einen Bypaßdruckregler zurückgekoppelt wird. Die Kühltemperatur des Meßgaskühlers wird überwacht, bei ihrem Überschreiten wird ein Warnsignal gegeben, weil dann die Tritium-Auskondensierung beeinträchtigt würde. Ein Unterschreiten der Meßgaskühlertemperatur braucht nicht unbedingt durch einen gesonderten Temperaturfühler überwacht zu werden, weil diese Störung durch die Durchflußüberwachung mit erfaßt wird (der Durchfluß würde bei zufrierenden Leitungen absinken). Es kann naturgemäß jedoch auch zur Überwachung des Unterschreitens der zulässigen Meßgaskühlertemperatur ein gesonderter Temperaturfühler vorgesehen werden. Der erwähnten Durchflußgeber wird hinsichtlich Über- und Unterschreiten der zulässigen Durchflußwerte bevorzugt von einem Ringinitiator überwacht, der in diesen beiden Fällen ebenfalls ein Warnsignal abgibt und den Betriebsstundenzähler unterbricht.

Im folgenden wird anhand eines in der Zeichnung dargestellten Ausführungsbeispiels die Erfindung noch näher erläutert. Darin zeigt in vereinfachter Darstellung:

Fig. 1 ein Schaltschema der Probensammeleinrichtung mit ihren pneumatischen, hydraulischen und elektrischen Komponenten sowie Verbindungsleitungen und

Fig. 2 eine Draufsicht von Vorn auf einen Meßschrank für die Probensammeleinrichtung.

Gemäß Fig. 1 wird ein aus der Kaminabluft (der Kamin selbst ist nicht dargestellt) entnommener Gasstrom $g_0$ über den Ansaugzweig L0 mit Feinfilter 1 und nachgeschalteten Meßgaspumpe 2 zum Verzweigungspunkt 3 gefördert, von welchem einerseits die Bypaßleitung L1 und andererseits die Meßgasleitung L2 zum Leitungs-, Sammel- oder -knotenpunkt 4 führen, von dem die Gasströme $g_1$ und $g_2$ als Summenstrom $g_3$ durch die Leitung L3 in den Abgaskamin zurückgedrückt werden. Durch die parallel zur Meßgaspumpe 2 geschaltete, gestrichelt dargestellte zweite Meßgaspumpe 2' sowie durch die in Reihe zu den beiden Meßgaspumpen jeweils geschalteten Absperrventile 2.1, 2.1' ist angedeutet, daß zur Verbesserung der Redundanz mindestens eine zweiter Ansaugzweig L'0 vorgesehen sein kann, auf welchen die Umschaltung im Falle einer Störung bei der ersten Meßgaspumpe 2 erfolgt. In diesem Falle wird der gestörte Zweig durch sein Absperrventil 2.1 so lange abgeschaltet, bis die Störung behoben ist. Während dieser Zeit ist der Reservezweig L'0 in Funktion. Dieser wird dann bei Wiedereinschalten des Hauptzweiges L0 abgesperrt.

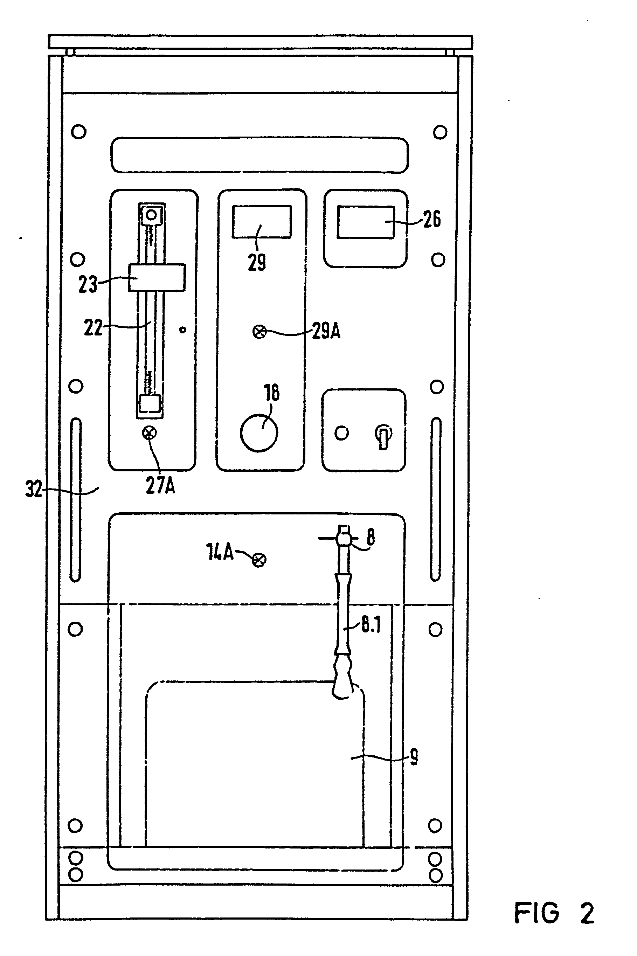

Das System des Meßgaskühlers 5 ist durch eine strichpunktierte Umrandung hervorgehoben. Durch den wärmetauschenden Behälter 5a des Meßgaskühlers 5 wird die Meßgasleitung L2 als Abscheideleitung geführt, welche bis zu einer ersten Kondensat-Sammelstelle 6 zumindest teilweise als spiralige Rohrschlange 6.1 abwärts läuft, so daß sich ein Zyklon-Abscheidereffekt für die im Meßgasstrom enthaltenen $H_2O$- und $T_2O$-Dämpfe ergibt, und von der Sammelstelle 6 mit einem zweiten, aufsteigenden Ast 6.2 verlegt und durch die Wand des Behälters 5a nach außen geführt ist. An die Sammelstelle 6 ist ein lediglich schematisch angedeutetes Feinabscheidesystem 7 über das Leitungsstück 6.3 angeschlossen, von diesem führt eine Kondensatabführleitung 7.1 mit Ablaßhahn 8 und flexiblem Leitungsstück 8.1 in ein unterhalb des Meßgaskühlers 5 befindliches Kondensat-Sammelgefäß 9, welches bis zum Spiegel N mehr als zur Hälfte mit dem Kondensat 10 aus $H_2O$ und $T_2O$ gefüllt dargestellt ist. Das Sammelgefäß 9 ruht auf einem gefederten Boden 11, dessen schematisch angedeutete Schraubendruckfedern 12 sich auf der Bodenfläche 13 abstützen. Der Füllstandsmelder 14, der ebenfalls auf der Bodenfläche 13 befestigt ist, greift mit einem in Vertikalrichtung längsbeweglichen und federbelasteten Stößel 14.1 an der Unterseite des Bodens 11 an; durch den Stößel 14.1 wird ein nicht dargestellter Endschalter des Füllstandsmelders 14 betätigt, wenn in dem Sammelgefäß 9 das Kondensat ein bestimmtes Niveau erreicht hat, so daß sich aufgrund der Schwerkraft der Boden 11 dem Füllstandsmelder so weit nähert, daß der Schaltpunkt seines Endschalters erreicht ist. Es könnten auch mehrere gestaffelt gegeneinander versetzte Schaltpunkte versehen sein, so daß nicht nur z. B. die 95 %-ige Füllung des Sammelgefasses 9, sondern auch z. B. eine 80 %-ige Füllung als Vorwarnung gemeldet werden kann. Nach Betätigung des Schalters leuchtet die Anzeige 14a "Kondensat entleeren" auf der Frontseite des Meßschrankes (Fig. 2) auf. An den Endschalter des Füllstandsmelders 14 ist die Signallampe 14A über die elektrische Signalleitung e1 angeschlossen.

Die dem Meßgas beim Durchfluß durch die Abscheideleitung 61, 62 entzogene Wärme wird aus dem Kühlraum 5c des Behälters 5a durch einen äußeren Kühlzweig 15 nach außen abgeführt, welcher an den Kühlraum 5c mittels entsprechender Anschlußstutzen bei 15b saugend und bei 15a drückend angeschlossen ist. Über Leitungsstück 15.1 und über den Anschlußstutzen 15b wird vom Kältekompressor 16 das gasförmige Kältemittel, insbesondere Frigen, angesaugt, komprimiert und dann die Wärme des aufgrund der Kompression weiter erwärmten Kältemittels in den Rohrschlagen des Kondensators 17 nach außen abgestrahlt, wobei dieser Kondensator 17 dem forcierten Luftstrom eines nicht dargestellten Kühlluftgebläses ausgesetzt ist. Die Pfeile 17a symbolisieren die Wärmeabfuhr nach außen. Im darauffolgenden Leitungsteil 15.3 erfolgt die Entspannung des Kältemittels in den Kühlraum 5c des Behälters 5a hinein, und zwar durch die Mündungsstelle 15a hindurch. An den Leitungsteil 15.3 ist ein Frigen-Druckmanometer 18 angeschlossen, welches Rückschlüsse auf die ordnungsgemäße Arbeitsweise des Kühlzweiges zuläßt. Zur Erzielung eines gleichmäßigen Kältemittel-Mengenstroms bzw. einer gleichmäßigen Kühltemperatur ist der Kompressor 16 durch einen Bypaß 19 mit Drucksteuerventil 20 überbrückt. Letztes wird durch den saugseitigen Druck des Kompressors 18 gesteuert und im Schließsinne betätigt, wenn dieser Druck zu niedrig liegt sowie im Öffnungssinne betätigt, wenn der Saugdruck zu stark abfällt. Da die Temperatur einen proportionalen Zusammenhang mit dem Kältemitteldruck hat, kann dadurch im Kühlraum 5c eine konstante Temperatur von ca. 2° C erreicht werden.

Die Konstanthaltung und Regelung des Meßgas-Mengenstroms in der Meßgasleitung L2 ist von wesentlicher Bedeutung. Durch die Drossel 21 im Meßgasleitungsstück L21 wird der Strömungswiderstand in der Meßgasleitung 12 im Verhältnis zur Hauptstromleitung L1 bestimmt; diese Drossel kann einstellbar sein. Im dargestellten Beispiel fließt durch die Meßgasleitung L2 40 % des Gesamtstromes $g_0$, so daß der Hauptstrom $g_1$ in der Bypaßleitung L1 rund 60 % ausmacht. Durch den der Drossel 21 nachgeschalteten Durchflußgeber 22 ist eine Kontrolle des Gasmengenstroms möglich. Die gewünschte Menge, z. B. 1 $m^3$/Std., wird mit dem Nadelventil dieses Durchflußgebers fein eingestent (der Grobeinstellung dient die Drossel 21). Der Durchflußgeber 22 ist mit einem bistabilen Ringinitiator 23 versehen. Bevor auf dessen Funktion eingegangen wird, sei zunächst noch auf die Druckregelung mit Hilfe der Bypaßleitung L1 eingegangen, mittels welcher vom Verzweigungspunkt 4 hinter dem Durchflußgeber 22 der dort herrschende Meßgasdruck auf ein Druckdifferenz-Regelventil 24 auf der Druckseite der Meßgaspumpe 2 zurückgeführt wird. Mittels der Meßleitung 24.1 wird der Druck auf der Druckseite der Pumpe 2 abgefragt und - ist dieser zu hoch - wird das Regelventil 24 im Öffnungssinne betätigt, im anderen Falle (Druck zu niedrig) im Schließsinne.

Durch diese drei mengenstromregulierenden Maßnahmen, nämlich Drossel 21, Durchflußgeber 22 mit Nadelventil und Bypaß-Druckregelung L1, 24, 24.1 wird eine sehr gute Mengenstromkonstanz erreicht. Die Bypaßdruckregelung ist Partialdruck bestimmt und stellt deshalb eine temperaturabhängige Eigenmediumregelung dar. Der saugseitige Druck der Pumpe 2 (bzw. 2') ist immer gegeben, weil diese Pumpe drückend arbeitet, mit anderen Worten: das Meßgas wird durch die Abscheideleitung $g_2$ hindurchgedrückt, was wesentliche Vorteile hinsichtlich Betriebsstabilität und Betrieb überhaupt im Vergleich zu einem saugenden Betrieb hat, weil bei einem saugenden Betrieb der Partialdruck und die Volumenanteile der auskondensierten Dämpfe nach Durchströmen des Meßgaskühlers nicht mehr vorhanden sind.

Zurück zum Ringinitiator 23: Dieser ist über Signalleitung e2 an den Halbleiterverstärker 25 angeschlossen. Falls die nicht näher dargestellte Metallkugel des Durchflußgebers 22 über dem Ringinitiator 23 oberhalb des Ringinitiators oder unterhalb desselben liegt, wird jeweils ein Signal "Durchfluß max" und "Durchfluß min" abgegeben, welches, verstärkt, am Ausgang des Verstärkers 25 ansteht und einerseits als ein Alarmsignal für die Signalleitung e3 dient, andererseits über Verbindungsleitung e4 zur Ansteuerung des Betriebsstundenzählers 26 dient. Falls der Durchfluß unter den eingestellten Wert fällt, schaltet der Betriebsstundenzähler 26 aus und die Alarmanzeige 27A "Durchfluß" leuchtet auf. Entsprechendes gilt, wenn der Durchfluß über den eingestellten Wert steigt. Eine weitere Überwachung erfolgt durch den Temperaturfühler 28, welcher die Temperatur im Kühlraum 5c des Behälters 5a abfragt, wobei der Meßwert über Signalleitung e5 dem Temperaturmeßgerät 29 mit integriertem Grenzwertgeber zugeleitet wird. Dieses gibt an seinem Ausgang ein Warnsignal auf den Leitungsteil e6 ab und damit auf die Alarm- oder Warnleuchte 29A, wenn ein oberer Temperaturgrenzwert, z. B. 3° C oder 2,5° C, überschritten wird. Wie man erkennt, steht an den Signalleuchten 27A, 29A und 14A ein Signal an, wenn der Meßgas-Durchfluß zu klein oder zu groß ist, die Temperatur des Kühlmittels zu hoch oder der Kondensatfüllstand zu hoch ist. Außerdem werden von den Signalleitungen e3, e6 und e1 die entsprechenden Signale über die Zweigleitungen e71 - e73 abgenommen und den Eingängen einer Gatterschaltung 30 zugeleitet, welche über ihre Ausgangsleitung e7 und den Signalumsetzer 31 eine Summenmeldung an die (nicht dargestellte) Warte gibt. Insbesondere ist die Gatterschaltung 30 ein Oder-Gatter. Die drei genannten Störquellenarten werden aber auch noch separat durch gesonderte Signalumsetzer 27U, 29U und 14U von den Leitungen e3, e6 und e1 abgenommen und auf die Leitungsteile e31, e61 und e11 zur Fernübertragung der Alarmmeldungen weitergegeben, wobei die Überwachung auch den Drahtbruch in einer der Signalleitungen umfaßt. Die Meßgaspumpe 2 bzw. 2' ist in bevorzugter Ausführung eine Vielzellen-Vakuumpumpe. Bei solchen Pumpen ist der Arbeitskolben insbesondere fliegend auf der Motorwelle gelagert. Hierdurch entfällt eine zusätzliche Lagerung im Seitendeckel. Die Lager der Antriebsmotoren sind gegen den Arbeitsraum der Vakuumpumpe abgedichtet. Verunreinigungen des Meßgases durch austretendes Fett der Lager ist deshalb ausgeschlossen.

Aus Fig. 2 ist der Meßschrank ersichtlich. Dieser hat eine mit Securit-Glas verglaste Fronttür 32 sowie eine Rücktür, die beide mit Sicherheitsschlössern versehen sind. Man erkennt die Signalleuchten 27A, 29A und 14A, in der oberen Hälfte den Durchflußmesser 22 mit Ringinitiator 23, daneben das Manometer 18 und die Temperaturanzeige 29, ferner in einem Feld rechts daneben den Betriebsstundenzähler 26. In der unteren Hälfte folgt auf den Ablaßhahn ein flexibles Schlauchstück 8.1, das an einem Anschlußstutzen des Kondensatsammelgefässes 9 angeschlossen ist.

**Patentansprüche**

1. Probensammeleinrichtung zum Sammeln von Tritiumspuren über den in der Kaminabluft einer kerntechnischen Anlage oder eines Kernkraftwerkes enthaltenen Anteil an $T_2O$-Dampf, wobei ein aus der Kaminabluft entnommener Meßgasstrom ($g_2$) über Filter (1) und Meßgaspumpe (2) und mindestens einen Zweig (L2) durch eine Abscheideleitung (6.1, 6.2) eines Meßgaskühlers (5) gedrückt, der Durchfluß gemessen und der Meßgasstrom ($g_2$) in den Abgaskamin zurückgeleitet wird, <u>gekennzeichnet durch</u> die folgenden Merkmale:
   - der Meßgasstrom ($g_2$) wird aus einem der

Kaminabluft entnommenen Gasstrom (g₀) abgezweigt und durch die parallel zu einer Bypaß-Leitung (L1) an den Verzweigungspunkt (3) angeschlossene Meßgasleitung (L2) über eine der Abscheideleitung (6.1, 6.2) nachgeschaltete Reihenschaltung aus Meßgasdrossel (21) und Durchflußgeber (22) in den Abluftkamin gedrückt;

- am tiefsten Punkt (6) der zumindest teilweise als spiralige Rohrschlange (6.1) geführten Abscheideleitung (6.1, 6.2) befindet sich ein Feinabscheidesystem (7), welches über eine Kondensat-Abführleitung (7.1) mit Ablaßhahn (8) in ein unterhalb davon befindliches, einen Füllstandsmelder (14) aufweisendes Kondensatsammelgefäß (9) mündet;

- zur Regulierung des Meßgasdruckes der Meßgaspumpe (2) an dem den pumpendruckseitigen Vordruck führenden Eingang der Meßgasleitung (L2) ist der am Ausgang des Durchflußgebers (22) herrschende Meßgasdruck über die der Druckmessung dienende Bypaß-Leitung (L1) und ein Druckdifferenz-Regelventil (24) auf die Druckseite der Meßgaspumpe (2) zurückgeführt; und

- in dem vom Kühlmedium durchströmten und die Abscheideleitung (6.1, 6.2) aufnehmenden Kühlraum (5c) des Meßgaskühlers (5) ist mindestens eine Temperaturfühleranordnung (28) installiert, welche zur Erfassung des Temperatur-Istwerts und zur Grenzwertmeldung zumindest bei Überschreiten eines oberen Temperaturgrenzwertes dient.

2. Einrichtung nach Anspruch 1, dadurch gekennzeichnet, daß das Kondensatsammelgefäß (9) auf Federstützen (12) gelagert und die füllstandsabhängige Auslenkung des Gefäßes (9) oder eines mit ihm verbundenen Teiles zur Betätigung wenigstens eines Endschalters (14) herangezogen ist, welcher den maximalen Füllstand (N) anzeigt.

3. Einrichtung nach Anspruch 1 oder 2, dadurch gekennzeichnet, daß der Durchflußgeber (22) mit einem bistabilen Ringinitiator (23) gekoppelt ist, welcher über einen Verstärker (25) bei Unterschreiten und Überschreiten des maximalen Durchflußwertes einen an den Durchflußgeber (22) angeschlossenen Betriebsstundenzähler (26) abschaltet und ein Alarmsignal abgibt.

4. Einrichtung nach einem der vorhergehenden Ansprüche 1 bis 3, gekennzeichnet durch eine Gatterschaltung (30) zur Erzeugung einer an die Warte weiterleitbaren Sammelmeldung "Anlage gestört bzw. nicht gestört", welcher wenigstens die folgenden Eingangssignale zuleitbar sind:
Durchfluß min. und max.,
Drahtbruch,
Temperatur Kühlmittel hoch und
Kondensatfüllstand hoch.

5. Einrichtung nach Anspruch 1, dadurch gekennzeichnet, daß einem ersten Ansaugzweig (L0) mit der Reihenschaltung aus der Meßgaspumpe (2) und einem Absperrventil (2.1) als Reservezweig ein zweiter Ansaugzweig (L'0) mit zweiter Meßgaspumpe (2') und in Reihe dazu liegendem Absperrventil (2.1') parallel geschaltet ist.


**Claims**

1. A sample collecting device for collecting traces of tritium via the component of T₂O-vapour contained in the flue exhaust-air of a nuclear facility or a nuclear power station, where a measured gas flow (g₂) obtained from the flue exhaust-air is forced through a collecting pipe-line (6.1, 6.2) of a measured gas cooler (5) via a filter (1), a measured gas pump (2) and at least one branch (L2) and the measured gas flow (g₂) is returned to the waste gas flue after measuring the through-put, characterised by the following features:

- the measured gas flow (g₂) is branched off from a gas flow (g₀) obtained from the flue exhaust-air and is forced into the exhaust-air flue through the measured gas pipe-line (L2), connected to the branching point (3) in parallel to a by pass line (L1), via a series arrangement consisting of a measured gas choke (21) and through put controller (22) which is connected to the output end of the connecting pipe-line (6.1, 6.2);

- at the lowest point (6) of the collecting pipe-line (6.1, 6.2) which consists at least in part of a spiral coiled pipe (6.1), there is arranged a fine collecting system (7) which leads via a condensate discharge pipe-line (7.1) equipped with an outlet cock (8), into an underlying condensate collector vessel (9) equipped with a level indicator (14);

- to permit the regulation of the measured gas pressure of the measured gas pump (2) at the inlet of the measured gas pipe-line (L2), at which the admission pressure of the pressure-side of the pump prevails, the measured gas pressure which occurs at the output of the throughput controller (22) is returned via the bypass pipe-line (L1), which carries out the pressure measurement, and to the pressure side of the measured gas pump (2) via a pressure-difference regulating valve (24); and

- the cooling chamber (5c) of the measured gas cooler (5), which chamber accommodates the collecting pipe-line (6.1, 6.2) and is traversed by the cooling medium contains at least one temperature sensor arrangement (28) to detect the actual temperature value and to indicate the limit value, at least when an upper temperature limit value is exceeded.

2. A device as claimed in Claim 1, characterised in that the condensate collector vessel (9) is mounted on spring supports (12) and the level-dependent deflection of the vessel (9) or a component connected thereto is used to actuate at least one end switch (14) which indicates the maximum level (N).

3. A device as claimed in Claim 1 or 2, <u>characterised in that</u> the throughput controller (22) is coupled to a bistable ring initiator (23) which disconnects a running time meter (26) connected to the throughput controller (22) and emits an alarm signal via an amplifier (25) if the maximum throughput value is undershot or overshot.

4. A device as claimed in one of the preceding Claims 1 to 3, <u>characterised by</u> a gate circuit (30) which generates a collective message, "out-of-order" or "in-order" as the case may be, which can be forwarded to the switch-gear and to which at least the following input signals can be allocated:

Throughput min. and max.;
Wire breakage;
Coolant temperature high; and
Condensate level high.

5. A device as claimed in Claim 1, <u>characterised in that</u> a first suction arm (L0) containing the series arrangement of the measured gas pump (2) and a shut-off valve (2.1) is connected in parallel with a second suction arm (L'0), forming a reserve arm containing a second measured gas pump (2') and a series connected shut-off valve (2.1').

**Revendications**

1. Dispositif de prise d'échantillons destiné à recueillir des traces de tritium dans la teneur en vapeur de $T_2O$ de l'air résiduaire de la cheminée d'une installation du génie nucléaire ou d'une centrale nucléaire, un courant gazeux à mesurer ($g_2$), prélevé de l'air résiduaire de la cheminée, étant refoulé, en passant par un filtre (1) et par une pompe pour le gaz à mesurer (2) et par au moins un conduit de dérivation (L2) dans un conduit de séparation (6.1, 6.2) d'un dispositif de refroidissement du gaz à mesurer (5), le débit étant mesuré et le courant de gaz à mesurer ($g_2$) étant retourné à la cheminée pour le gaz résiduaire, remarquable par les caractéristiques suivantes:

- le courant de gaz à mesurer ($g_2$) est dérivé d'un courant de gaz ($g_0$) prélevé de l'air résiduaire de la cheminée et est refoulé à la cheminée pour l'air résiduaire par le conduit pour le gaz à mesurer (L2), raccordé au point de dérivation (3) et monté en parallèle avec un conduit de dérivation (L1), en passant par un circuit en série, qui est en aval du conduit de séparation (6.1, 6.2) et qui est constitué d'un étranglement pour le gaz à mesurer (21) et d'un débitmètre (22);
- au point le plus bas (6) du conduit de séparation (6.1, 6.2), s'étendant au moins en partie sous la forme d'un serpentin tubulaire (6.1), se trouve un système de séparation fin (7), qui, par un conduit d'évacuation du produit condensé (7.1) à robinet de sortie (8), débouche dans un réservoir (5) destiné à recueillir le produit condensé, se trouvant en-dessous du robinet de sortie et comportant un indicateur de niveau (14);
- pour réguler la pression du gaz à mesurer de la pompe pour le gaz à mesurer (2) à l'entrée du conduit pour le gaz à mesurer (L2) amenant la pression initiale du côté du refoulement de la pompe, la pression du gaz à mesurer, régnant à la sortie du débitmètre (22), est ramenée au côté de refoulement de la pompe pour la gaz à mesurer (2), en passant par le conduit de dérivation (L1) servant à mesurer la pression et par une soupape de réglage de la pression différentielle (24); et
- dans la chambre de refroidissement (5c) du dispositif de refroidissement du gaz à mesurer, qui est parcourue par du fluide de refroidissement et qui refoit le conduit de séparation (6.1, 6.2), est monté au moins un dispositif de détection de la température, qui sert à détecter la valeur réelle de la température et d'avertisseur de valeur limite au moins lors du dépassement d'une valeur limite supérieure de la température.

2. Dispositif suivant la revendication 1, caractérisé en ce que le réservoir (5) destiné à recueillir le produit condensé est monté sur des appuis élastiques (12) et on tire parti du déplacement du réservoir (9) en fonction du niveau de remplissage pour la manoeuvre d'au moins un interrupteur de fin de course (14), qui indique le niveau maximum de remplissage (N).

3. Dispositif suivant la revendication 1 ou 2, caractérisé en ce que le débitmètre (22) est accouplé à un interrupteur capacitif annulaire (23) qui, par un amplificateur (25), met hors circuit un compteur des heures de fonctionnement (26) relié au débitmètre (22) et émet un signal d'alerte quand la valeur maximale du débit devient inférieure à une certaine valeur et la dépasse.

4. Dispositif suivant l'une des revendications précédentes 1 à 3, caractérisé par un circuit à porte (30) pour produire une signalisation de prélèvement "Installation en dérangement ou non", qui peut être envoyée au poste de contrôle et auquel peuvent être envoyés au moins les signaux suivants:

débit minimum et maximum,
rupture de conducteur,
température de l'agent de refroidissement élevée, et
niveau du produit condensé élevé.

5. Dispositif suivant la revendication 1, caractérisé en ce qu'avec une première dérivation d'aspiration (L0) ayant le circuit en série, constitué de la pompe pour le gaz à mesurer (2) et d'une soupape d'arrêt (2.1) est montée en parallèle, en tant que dérivation de réserve, une seconde dérivation d'aspiration (L'0) ayant une seconde pompe pour le gaz à mesurer (2') et, en série avec celle-ci, une soupape d'arrêt (2.1').

FIG 1

0 129 110

FIG 2